# EUROPEAN PATENT APPLICATION

(11) **EP 0 541 314 A2**
(43) Date of publication of application: **12.05.1993**
(21) Application number: 92310005.1
(22) Date of filing: 02.11.1992
(51) Int. Cl.: H04Q 7/04, H04B 7/26

(54) **Radio communication system with database representing a map of the area covered**

(30) Priority: 04.11.1991 GB 9123338
(71) Applicant: SECURITY SERVICES plc, Sutton, Surrey, SM1 4LE (GB)
(72) Inventor: Crompton, Wyn, c/o Security Services PLC, Sutton, Surrey SM1 4LE (GB)
(74) Representative: Ayers, Martyn Lewis Stanley

(57) **Abstract**

In order to facilitate the preparation and storage of a database radio coverage data (such as received signal strength), a polar coordinate system is used to assign coverage data values to a number of variable-sized areas which are bounded by concentric circular arcs and radii from a common origin. Data extracted from the database is used to adjust radio transmitter and/or receiver operation according to location. The database can be used in a mobile transceiver system to facilitate communication via a base station, e.g. in a cellular telephone or cellular radio network.

## Description

The present invention relates to radio communication, particularly radio communication involving one or more mobile transmitter/receivers, e.g. in a cellular radio network.

The preparation of a record of the radio coverage of geographical terrain for a given system is normally achieved by allocating a signal level value to each of many small squares defined in terms of Cartesian coordinates. This may apply to ground level or to any specified height above ground level, and requires the storage in some form, usually as a computer database, of a comparatively large amount of data.

A TV broadcasting authority, for example, needs to maintain such a record in order to be able to respond to any queries about the expected signal strength of its transmissions at any location.

A compact portable equivalent of such a computerised database would have a number of practical applications, were it possible to implement one. However, the conventional Cartesian method of mapping the radio coverage data would require large amounts of data storage space and so would be expensive to implement. In particular, with current memory IC capacities and prices it would be commercially unattractive to implement for use in a mobile telephone such as a car-phone.

The present invention is intended to provide the required information from fewer stored bits through the use of polar coordinates. It is remarkable that there does not appear to be any record of such previous use since polar coordinates are normally used to calculate the radiation from an aerial, for example.

This is probably because maps are conveniently and typically broken up into quarter-kilometre sided squares, each regarded as covered by a specific value of radio signal. Polar coordinates are not so directly related to conventional maps.

The present invention can function without any reference to geographic terrain, since it provides a database which is effectively a radio coverage map, or perhaps several maps for different systems, coupled with the location of an 'intelligent' mobile radio terminal in relation to such radio networks.

A new term has been generated to describe a unit of area within which a constant value of radio signal is assumed to exist, namely a "fixel". For improved accuracy the fixel should cover smaller areas, but this would require prohibitively large amounts of data storage as the unit becomes smaller.

Polar coordinates provide more efficient means of formatting a record of radio coverage since radio transmitters usually radiate different amounts of power into different radial sectors and the attenuation characteristics for various sectors may also differ.

Briefly, the fixel becomes a variable area formed by sector and radial boundaries closely related to natural laws of propagation, thus requiring fewer storage data bits.

According to the invention, there is provided a radio communication system comprising radio transmitter and receiver equipment and a digital database of location-dependent values of a radio communication parameter, the database representing a map of an area divided up into a number of sub-areas of variable extent and to each of which a respective value of the parameter is ascribed, the areas being bounded by circular sectors centred on an origin location and pairs of radii from that origin.

The invention is applicable to a SLIM (self-locating intelligent mobile) for use in mobile radio communication. A SLIM needs to know the signal strength available at a given location (which it can sense separately through systems such as Securicor's Datatrak (TM) network) and also the direction of the appropriate base station from that location so that directional aerials can be used to great advantage from several points of view. Better signals, less interference, and more advantageous re-use patterns result from this, as in the case of point-to-point communications.

The invention will be further described by way of non-limitative example with reference to the accompanying drawings, in which:-
Figure 1 illustrates a mobile communication network;
Figure 2 shows, in block diagram form, a mobile transceiver incorporating the present invention; and
Figure 3 illustrates the concepts of mapping radio coverage data by use of pixels.

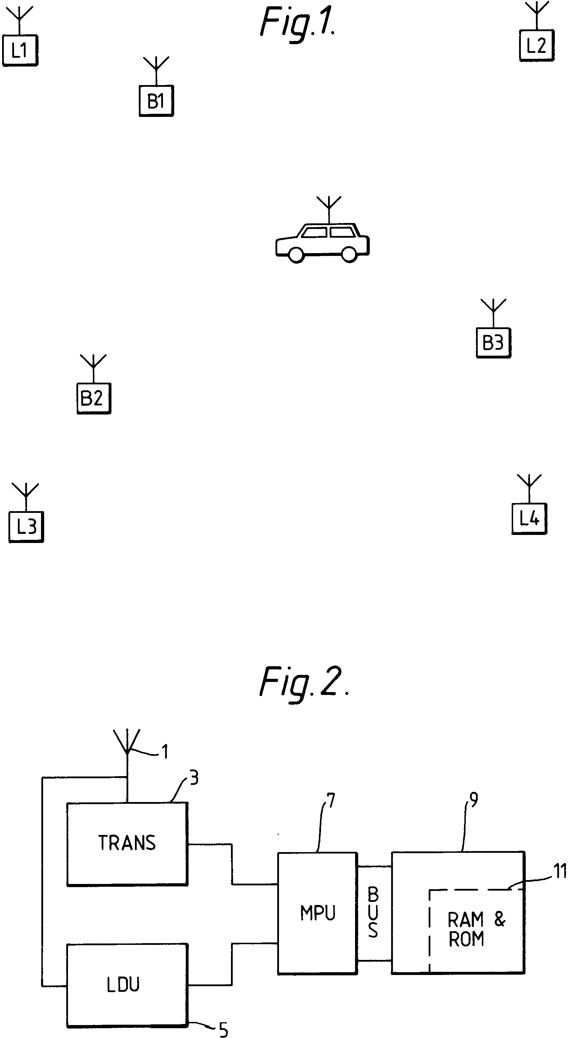

Figure 1 illustrates in an idealised schematic form a map of part of a radio communication system embodying the present invention. In operation of the system, radio communication between a mobile M (e.g. a cellular telephone in a moving vehicle) and a remote point (not shown) is relayed via cellular base stations B1-3..N sited at suitable locations. The communication system can be a cellular radio system in itself, or part of a cellular telephone system. There are also a number of transmitters L1-L4 which transmit signals in a lower part of the spectrum than the communications channels and which can be used by circuitry at the mobile to determine its location; such a facility is provided inter alia as part of the Datatrak (TM) system. This location information can be transmitted by the mobile to the base station with which it is in radio contact so that a communication is appropriately routed to it via the base station network.

Typically, in a cellular radio system, a section of the radio system is split up into a number of equal channels of, say, 5 KHz width, some channels being used for communication between subscribers for voice or data communications and others for transmitting trunking information and other system information between the base stations. In cellular systems, the channel allocations in adjacent reception areas are chosen so as to strike a balance between co-channel interference, channel usage and other considerations.

For a particular mobile there are several variables relevant to its communication with the remainder of the system, including:-
1) Which base station it should communicate with.
2) What channel to use.
3) What transmitter power to use (to avoid excessive interference the power should be kept to the minimum consistent with adequate reception at the base station).

It will be apparent to the skilled man that depending on circumstance and the equipment available at the mobile there might be several other relevant variables such as aerial orientation, polarization, modulation method (amplitude - or frequency modulated, single sideband, tone in band single side band etc), data bit rate for digital data etc., and the invention is applicable to any or all or these and to any other location-dependent parameter relevant to radio communication.

The most suitable values of some of these variables, in particular 1)-3) cannot be determined a priori and require a survey to be conducted in the field.

Conventionally a database of such radio coverage information would be constructed by dividing a geographical area into a number of unit cells, specified by cartesian coordinates, and then assigning to each cell the appropriate data. As noted above, however, the amount of digital data necessary to characterise the database would preclude its implementation in a form which would render its contents available to circuitry within a mobile, e.g. by storage in ROM ICs.

According to the present invention it is proposed that instead of using a fixed-size square unit area, the geographical area be divided up into the above mentioned "fixel" areas which, referred to some suitable origin, are bounded by two concentric areas and radii, as shown in Figure 2, and over which a particular value of the parameter in question can be taken to apply. The construction of the database is then conducted on the basis of:-
1) Selecting the number of fixels necessary to characterise the area of interest.
2) Determining, by reference to measurement data of the parameter of interest, a configuration of fixels which enables a value of the parameter to be assigned to each which meets some suitable error criteria for the area of the fixel (for example least square error between the actual value of the parameter of interest at any point within the fixel and the assigned value) and assigning the values so determined to the fixels.

Step 2), and Step 1) for that matter, may be iterated as required so that the database adequately characterises the area of interest.

Where more than one parameter is of interest, a single set of fixels can be established, with suitable values of each parameter assigned to them. Alternatively the database could comprise several separate fixel "overlays" each having a fixel configuration and set of fixel values for one or more of the parameters.

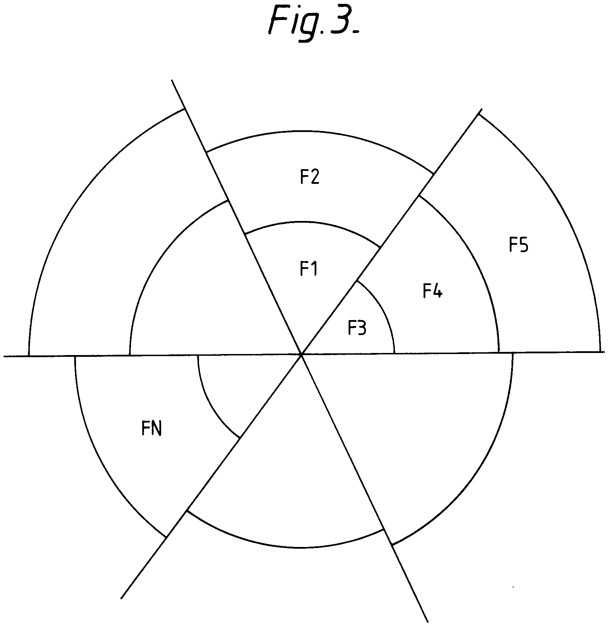

Figure 3 shows, in block diagram form, the mobile transceiver equipment of a mobile station in one embodiment of the invention. It comprises an aerial 1, a voice and/or data communications transceiver 3, a location determining unit 5 and a microprocessor sub-system 7.

The microprocessor system comprises a microprocessor, memory 9, including ROM containing its operating instructions, working RAM and suitable interfacing to exchange data with and supply commands to the location determining unit 5 and the transceiver 3. In operation it receives the location data from the location determining unit 5, processes it to access the radio coverage database 9 and controls one or more parameters of the transceiver 3 in accordance with data looked up from the database.

Consider an example where one parameter of interest is the power at which the transceiver in a mobile should transmit. The microprocessor is programmed, by instructions stored in ROM 11 to perform the following steps:-
1) To read the current mobile location from the location-determining unit 5. This will be in digital form, though the exact format is irrelevant to the present invention. It could, for example, be in cartesian format. It may be convenient, however, if the entire area to be covered by the database is divided up into unit square or rectangular areas which are then numbered in sequence, and the microprocessor then uses a table, or some suitable algorithm to transform the coordinates of the unit area where the mobile currently is into the number assigned to that area.
2) To scan the database to identify a suitable one of the base stations with which to establish, or to continue, communications.
3) For each parameter of interest, in this example, the channel frequency and power, to scan the database by reference to the mobile's current location to identify in which of the fixels associated with the base station identified in 2) the mobile is located.
4) To extract from the database the fixel record for the fixel identified in 2).
5) To instruct the transceiver 3 to operate using the parameters extracted in steps 3-4 so as to communicate with the base station identified in step 2) on the channel and at the power determined in step 4).

In the compilation or updating of the database, as noted above, some parameters of interest will require measurement in the field. A location determining system such as Datatrak can assist in this. Thus, it is possible to contemplate using a mobile microcomputer connected to a location determining unit and circuitry for measuring the parameter(s) of interest, the microcomputer being programmed to periodically log its current position and the parameter value(s) into a database stored in some suitable storage device such as a hard disk drive. A vehicle equipped with such a system could then be driven around an area of interest to compile or update the coverage database.

## Claims

1. A radio communication system comprising radio transmitter and receiver equipment and a digital database of location-dependent values of a radio communication parameter, the database representing a map of an area divided up into a number of sub-areas of variable extent and to each of which a respective value of the parameter is ascribed, the areas being bounded by circular sectors centred on an origin location and pairs of radii from that origin.

2. A system according to claim 1 wherein the database stores, for each of said sub-areas, values of a plurality of radio communication parameters.

3. A system according to claim 1 or 2 wherein the transmitter and/or receiver equipment is operative to condition its operation in accordance with a value extracted from the database.

4. A system according to Claim 1, 2 or 3, wherein the transmitter and/or receiver equipment includes means for setting at least one parameter of its operation in accordance with a value of that parameter or those parameters obtained from a record extracted from the database.

5. A system according to claim 4, wherein the at least one parameter includes at least one of: the frequency of a radio communication channel which the system is to use; identification of another system with which to communicate; transmitter power to use; aerial orientation; polarisation; modulation method; and data bit-rate.

6. A system according to any one of claims 1-4, wherein the equipment includes means for determining its own location, or that of equipment with which it is to communicate, and for accessing within the database the record relating to that location.
